# EUROPEAN PATENT SPECIFICATION

(11) **EP 4 323 243 B1**
(45) Date of publication and mention of the grant of the patent: **05.03.2025**
(21) Application number: 22720411.2
(22) Date of filing: 01.04.2022
(51) Int. Cl.: B60T 7/06, A63F 13/245, B60T 11/16

(54) **BRAKE CYLINDER COMPRISING TWO INTEGRATED CHAMBERS**
BREMSZYLINDER MIT ZWEI INTEGRIERTEN KAMMERN
CYLINDRE DE FREIN À DEUX CHAMBRES INTÉGRÉES

(30) Priority: 16.04.2021 EP 21168955; 23.08.2021 US 202117445638
(43) Date of publication of application: 21.02.2024
(73) Proprietor: Asetek Danmark A/S, 9230 Svenstrup J (DK)
(72) Inventor: ERIKSEN, André Sloth, 9240 Nibe (DK); HENRIKSEN, Kim, 9382 Tylstrup (DK)
(74) Representative: Budde Schou A/S
(86) International application number: PCT/EP2022/058794
(87) International publication number: WO 2022/218727

(56) References cited:
- CN-U- 203 417 459
- JP-A- 2014 084 091
- US-A1- 2007 018 498
- US-A1- 2013 167 526
- US-A1- 2017 190 328

## Description

### CROSS-REFERENCE TO RELATED APPLICATIONS

This application claims priority to European Patent Application No. 21168955.9 filed on April 16, 2021. The application claims priority form US Application No. 17/445,638 filed on August 23, 2021.

### BACKGROUND

### FIELD OF THE INVENTION

The present invention relates to a brake cylinder for use in automotive simulators that is both cost effective to produce and provides authentic feedback when in use.

### DISCUSSION OF THE RELATED ART

Automotive simulation systems that simulate the experience of driving a car are used for both video gaming purposes as well as for training purposes for persons involved in driving, such as racing car drivers. To effectively achieve these video gaming and training purposes, the simulation provided by these automotive simulation systems must be able to replicate the experience of a real car with a high degree of accuracy and authenticity. However, designing an automotive simulation system that achieves a high degree of accuracy and authenticity is difficult and expensive to produce.

In order to make the simulation as close to reality as possible (i.e., with a high degree of accuracy and authenticity), it is important that in addition to the visual experience, user interface equipment such as steering wheels and brake systems have to be equal to that which is experienced in a real car. This allows for maximum learning potential in automotive simulation systems used for training and maximum entertainment emersion potential in automotive simulation systems used for video gaming purposes. Regarding brake systems in automotive simulation systems, it is not just important that the mechanical elements, such as the brake pedals, look like those and feel like those of a real car, it is also important to have the tactile response (e.g., the feedback and feel of pressing the brake pedal) in an automotive simulation system be the same as that which is experienced in a real car.

In conventional brake systems that are used in automotive simulation systems, depressing a brake pedal compresses a liquid (such as oil) in a chamber of a main brake cylinder. The elevated pressure in this chamber is then transferred to a slave cylinder where the pressure is measured. By converting the measured pressure in this slave cylinder, an electrical signal is generated which can be used as input to a simulation program of the automotive simulation system. These components of conventional brake systems take up a lot of space within the brake systems, and the incorporation of multiple interconnected chambers connected via tubes make manufacturing such conventional brake systems expensive to produce.

One example of a conventional brake system is described in US2017/0190328A1, where a brake system with multiple pistons, chambers, and a stroke sensor for controlling four wheels of a vehicle is disclosed.

Conventional brake systems that are used in automotive simulation systems and which are based on hydraulics are also prone to leak due to many fitting and connections that each are regions where fluid may leak out of the system. Fluid leakage causes the performance of the braking system to deteriorate over time and is a hazardous risk near electronics that may short-circuit due to leaking fluids.

One solution to this issue known in the art is to make braking system which are purely mechanical having no hydraulics and thus no fluid which can leak from the system. Such system relies on resistance solely from the compression and elastic deformation of a resilient piece of material. While such a solution solves the risk of leakage, the tactile and physical feedback is significantly different from that of a real car.

In view of the foregoing, it is desirable to create a brake system that is simple and inexpensive to produce while maintaining the look and feel of a brake system in a real car. The brake cylinder comprising two integrated chambers for an automotive simulation system is directed to overcoming one or more of the problems set forth above and/or other problems of the prior art.

### SUMMARY OF THE INVENTION

The invention is set out in the appended set of claims and to further explain the features defined in these claims they are further described in the following:

A brake cylinder according to the invention is defined in claim 1.

It is to be understood that as the brake cylinder is a hydraulic closed system the pressure is the same inside the enclosure. Thus the pressure sensor may be located anywhere in connection with the hydraulic system. For example the pressure is the same within the slave cylinder chamber and the master cylinder chamber the pressure sensor physically arranged to be in communication with either of the chambers as it will be in pressure communication with both chambers, and the rest of the brake cylinder, regardless. In all discussed embodiments of the invention it is possible to use one or more sensors, hence it is possible to have multiple pressure sensors in fluid communication with the chambers of the brake cylinder or to have a one or more pressure sensors in combination with other types of sensors such as a load cell using a strain gauge, a rotary potentiometer, a Hall effect sensor in combination with a magnet, or temperature sensors or other types of sensors which may provide auxiliary information about the brake cylinder.

A brake system according to the invention is defined in claim 11.

As described above, the brake cylinder includes a brake cylinder housing with a master cylinder chamber and a slave cylinder chamber. The cylinder chambers are separated by the wall defining openings allowing liquid to pass from the master cylinder chamber to the slave cylinder chamber. The master cylinder chamber includes the master piston for connecting to a brake pedal (or similar interface), and the master piston when pushed is adapted to force liquid from the master cylinder chamber to the slave cylinder chamber via the openings. The slave cylinder chamber comprises a slave piston which is adapted to be pushed when liquid enters from the master cylinder chamber into the slave cylinder chamber.

In some variants the fluid communication between the master cylinder chamber and the slave cylinder chamber may be provided by another channel than the one or more openings in the wall between the chambers. For example a channel may be provided in some other part of the brake cylinder, such as the outer wall, rather than the separating wall. Another example is by the presence of an external channel such as a tube extending externally from the brake cylinder, for example running along the outer surface of the brake system or connecting the master cylinder chamber and the slave cylinder chamber via another piece of equipment arranged in the fluid path of the channel. External channels thus have the benefit that it may be possible to connect the master cylinder chamber and the slave cylinder chamber via another piece of equipment which may provide additional functionality to the brake system. In contrast an integrated channel has the benefit of fewer connections and thus fewer points risking leakage. Thus by a channel is understood any means of providing fluid communication between the master cylinder and the slave cylinder. The channel may be integrated preferably in the form of an opening in the wall between the master cylinder chamber and the slave cylinder chamber. Alternatively the channel may be an external channel, such as a tube.

The master cylinder chamber and the slave cylinder chamber are housed in a common brake cylinder housing. The master cylinder chamber includes the master piston which can affect a fluid which again can affect the slave piston in the slave cylinder chamber. The fluid is preferably an oil or another low-compressible liquid used in braking systems. The master cylinder chamber and the slave cylinder chamber are mutual connected via at least one opening and preferably the master cylinder chamber and the slave cylinder chamber are substantially parallel. The two chambers are only separated by a wall constituting a part of the cylinder chamber wall in both cylinder chambers. The master piston is connected with the brake pedal via a master cylinder rod, which can affect movement of the master piston. Preferably the master piston and the slave piston are arranged such that in their respective cylinder chambers, the slave piston is pushed in an opposite direction of the master piston when the master piston is pushed. In this manner a very compact design of the brake cylinder housing is achieved.

In one embodiment of the brake cylinder, the master cylinder is arranged with an internal master cylinder rod engaging with a cavity in the master piston and with a master cylinder spring surrounding the internal master cylinder rod at least along the length of the rod. The internal master cylinder rod is preferably attached to the master cylinder at the opposite end of the entrance of the master cylinder rod connected with the brake pedal. The master cylinder rod extends along the length of the master cylinder chamber into a cavity of the master piston that extends into the master cylinder rod. The internal master cylinder rod is surrounded by a master cylinder spring along its entire length and the master cylinder spring continues into the cavity of the master cylinder rod connected with the brake pedal. Thus, the master cylinder spring may serve to bring the brake pedal back to its initial position after it has been pushed. Together the internal master cylinder rod and the master cylinder spring serve to control the movement of master piston in the master cylinder chamber.

In one embodiment the slave cylinder is arranged with an internal slave cylinder rod engaging with a cavity in the slave piston and with a slave cylinder spring surrounding the internal slave cylinder rod at least along the length of the rod. The internal slave cylinder rod is preferably attached to the slave cylinder at the end toward which the slave piston is moved when the brake is depressed. The slave piston element is connected with a damping system via a slave cylinder rod. The internal slave cylinder rod is surrounded by a slave cylinder spring which serves to bring the slave piston back to an unloaded position after the brake has been released. In combination, the internal slave cylinder rod and the slave cylinder spring serve to control the movement of slave piston in the slave cylinder chamber. Preferably the slave cylinder spring and the internal slave cylinder rod continue into at least a part of the cavity in the slave piston. Preferably the slave cylinder spring also continues into a cavity in the slave cylinder rod. Thus, the slave cylinder spring may serve to control the movement of the slave cylinder rod.

The unloaded position is considered the default position of the brake cylinder system as well as for the brake pedal; this can also be considered the released orientation of the system. The terms default position, unloaded position and released orientation will be used interchangeably throughout the application. This unloaded default position is also considered the first position of the system, hence when the system is in the unloaded position or default position of the system, the master piston is in the first master position and the slave cylinder is in the first slave position.

The master cylinder chamber preferably includes a stop for stopping the master piston. The stop is preferably mounted at the opposite end of the entrance of the master cylinder rod. Thus, the stop is mounted at the same end in the master cylinder chamber as the internal master rod. Preferably the stop surrounds the spring and the internal rod along its length.

In other preferred variants the end wall of the master cylinder chamber may function as a stop for the master cylinder piston element and no additional master cylinder stop member is necessary in the master cylinder chamber.

The position where the master piston is in contact the stop or the end wall, i.e. via contact between the piston element and the stop or end wall, the master piston is in the second master position.

Also, the slave cylinder chamber preferably includes a stop for stopping the slave piston. However, this stop is mounted in the opposite end of where the internal slave rod is mounted. The stop serves to stop the movement of the slave piston in the direction of the dampening device.

In other preferred variants the end wall of the slave cylinder chamber may function as a stop for the slave cylinder piston element and no additional slave cylinder stop member is necessary in the slave cylinder chamber.

The position where the slave piston is in contact with the stop, i.e. the slave cylinder stop member, or the end wall or the movement of the slave cylinder is stopped by the mechanical contact between a mechanical stop of a block or damper piston connected to the slave cylinder rod, the slave piston is in the second slave position.

Throughout the application the term "in front of" may be used, e.g. that fluid is in front of the master cylinder piston element. By in front of/the front is understood the end towards which the master cylinder piston element moves when the pedal is being depressed. This front end is considered the first end of the master cylinder chamber.

As mentioned above, the cylinder chambers are separated by a wall with openings that allow fluid to pass from the master cylinder chamber to the slave cylinder chamber (the fluid can also pass through these openings from the slave cylinder chamber back into the master cylinder chamber). In one embodiment of the brake cylinder, the wall includes only one opening which may be located both (i) next to the stop for stopping the master piston in the master cylinder chamber and (ii) next to the stop for stopping the slave piston the slave cylinder chamber. In this configuration, the opening is not blocked by the pistons, and the fluid may flow freely between the master cylinder chamber and the slave cylinder chamber (thereby, improving the operation of the brake cylinder). Both the master piston and the slave piston may be configured with recesses or rims having reduced cross section to allow flow of fluid to and from the opening.

In configurations where there is no separate stop element in the master cylinder chamber and/or the slave cylinder chamber the one or more openings will similarly be located both (i) next to the end wall at the first end of the master cylinder chamber and (ii) next to the end wall of the first end of the slave cylinder chamber. In this configuration, the opening is not blocked by the pistons, and the fluid may flow freely between the master cylinder chamber and the slave cylinder chamber (thereby, improving the operation of the brake cylinder). Both the master piston and the slave piston may be configured with recesses or rims having reduced cross section to allow flow of fluid to and from the opening.

In variants where the fluidic communication between the master cylinder chamber and the slave cylinder chamber is affected by another channel than the one or more openings in the wall dividing the chambers, the inlet and outlet of this channel in the master cylinder chamber and slave cylinder chamber respectively is located in the same manner as described for the location of one or more openings. That is to say that the channel inlet will be next to the master cylinder stop member or end wall at the first end of the master cylinder chamber, while the outlet will be next to the slave cylinder stop member or end wall at the first end of the slave cylinder chamber.

In one embodiment of the brake cylinder, the slave cylinder chamber communicates with a pressure sensor. The pressure sensor measures the pressure of the fluid in the slave cylinder chamber and converts this measurement into an electronic signal to be used for signaling the braking to the simulator software.

To obtain a more realistic or natural feeling of the brake, the brake cylinder may include a dampening device, and in one embodiment, the slave piston communicates with the dampening device. Preferably the dampening device is located outside the slave cylinder chamber and communicates with the slave piston via a slave cylinder rod. Preferably the dampening device includes a damper in a damper housing which cooperates with a block element connected with the slave cylinder rod. When the slave piston is activated, the block element is drawn towards the damper by the slave cylinder rod and applies pressure on the damper. The damper is capable of deforming when pressure is applied, thereby providing a dampening effect.

Preferably the damper housing is located outside the slave cylinder chamber in a manner where it is coaxially adjacent to the slave cylinder chamber.

Preferably the block element has an edge or a protrusion limiting how far the block element can move into the damper house and thereby how far the brake pedal can be pressed. The edge or protrusion forms a mechanical stop between two solid components of the brake cylinder causing a hard limit to the movement of the block element. The edge or protrusion is also found in alternative versions of the block elements such as the equivalent damper piston and the effect of creating a mechanical stop against another surface of the brake cylinder is the same.

Having a mechanical stop blocking the piston, movement of the block element, or damper piston enables the braking process to be divided into two phases. During the first phase of the braking process, i.e. before the mechanical stop is contacted, the pedal can be moved and both the master and the slave piston can move accordingly. During the second phase of the braking process, i.e. once the stop is contacted, the mechanical limits the further movement of the pedal, e.g. as the further movement of the slave cylinder piston element is prevented. By the mechanical stop limiting the further movement of the piston is understood an abrupt increase in the force required to move the pedal a predetermined distance compared to force required to move the pedal the same predetermined distance before the engagement of the mechanical stop. In some preferred embodiments the mechanical stop will completely prevent the further movement of the pedal, i.e. movement of the pedal would require permanent deformation of the mechanical stop or compression of an incompressible hydraulic fluid. In other preferred embodiments it will be possible to move the pedal in the second phase as well although engagement the mechanical stop will cause the abrupt transition to an increased resistance felt by the user as force is applied to the pedal, thereby requiring an increased force to depress the pedal further. This is equivalent to the feeling of a real pedal in a car where the resistance will change during the braking process. In preferred embodiments the brake cylinder is configured such that the length of the first phase can be adjusted, by adjusting the distance the pedal has to travel before the mechanical stop is engaged.

The mechanical stop and the two-phase braking process is beneficial in a hydraulic brake cylinder as it provides the user with feedback akin to that in a real car using a hydraulic brake system and having a two-phase braking process. In addition to the realistic tactile feedback the system has high precision as the increase in pressure within the brake cylinder chambers in the second phase of the braking process can be measured and provide the simulation system with feedback on the braking force throughout the braking process.

In alternative preferred embodiments based on the same underlying principle, the dampening device preferably includes a damper in a damper housing which cooperates with a damper piston physically connected with the slave cylinder rod. When the slave piston is activated, the damper piston is pushed towards the damper by the slave cylinder rod and applies pressure on the damper. Hence, the damper piston is a specific variant of a block element in contact with the slave cylinder piston, which is arranged to push against the damper rather than drawing on the damper, but both components have the same effect in that they are means for transferring force from the slave cylinder to the damper. The damper is capable of deforming when pressure is applied, thereby providing a dampening effect.

For the two-phase braking system with a damper and a mechanical stop, the damper will provide resistance in the first phase as the pedal moves and the resilient material of the damper is compressed. In the second phase the damper remains compressed and the movement of the pedal is stopped by the mechanical stop.

Throughout the application the terms damper and dampener will be used interchangeably to describe the damper element of the dampening device.

Preferably the damper is made from an elastomer material, such as nitril, silicone, fluorosilicone, neoprene, polyacrylate, polyurethane, polyisoprene and similar material. Preferably the dampener has a Shore A hardness in the range 30 to 90, such as in the range 40 to 80 when measured according to ASTM D2240. A hardness within such ranges provides a feeling in the brake pedal similar to the feeling of a brake pedal in a vehicle.

In another preferred variant the damper is made from a spring such as a compression spring or a disc spring.

### BRIEF DESCRIPTION OF THE DRAWINGS

The accompanying drawings, illustrate various embodiments and aspects of the present invention. In the drawings:
Fig. 1 illustrates a perspective view of a brake system with a brake cylinder according to an embodiment consistent with the present invention;
Figs. 2A and 2B illustrate respectively a side view of the brake cylinder of Fig. 1 and a cross section of the brake cylinder of Fig. 1;
Figs. 3A and 3B illustrate respectively a side view of the brake system of Fig. 1 in a released orientation and a cross section of the brake cylinder of Fig. 1 in the released orientation; and
Figs. 4A and 4B illustrate respectively a side view of the brake system of Fig. 1 in a depressed orientation and a cross section of the brake cylinder of Fig. 1 in the depressed orientation; and
Figs. 5A and 5B illustrate respectively a side view of a brake cylinder according to an alternative embodiment of the brake cylinder of Fig.1 in the released, default orientation and a perspective cross section of that embodiment of the brake cylinder; and
Fig. 6 illustrates an external view of an alternative embodiment of a brake cylinder having its damper housing on the opposite side of the attachment opening, which may replace the brake cylinder of Fig.1 to be used with the same type of pedal; and
Fig. 7 illustrates a perspective cross section of an alternative embodiment of a brake cylinder which may replace the brake cylinder of Fig.1 to be used with the same type of pedal, the cylinder is shown in the released orientation; and
Fig. 8 illustrates a cross sectional view of an embodiment of a brake cylinder based on the same working principle as the one illustrated in Fig.7.

### DETAILED DESCRIPTION

The following detailed description refers to the accompanying drawings. Wherever possible, the same reference numbers are used in the drawings and in the following description to refer to the same or similar parts.

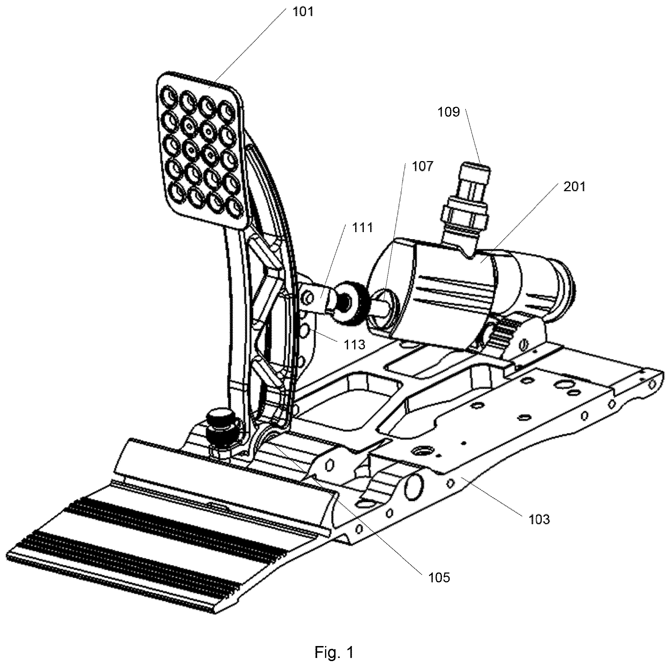

Fig. 1 illustrates an embodiment of brake system for use in an automotive simulation system such as a racing video game simulator or a professional racecar driver training simulator. The brake system includes a brake pedal 101 connected to a brake cylinder 201. The brake pedal 101 and brake cylinder 201 are mounted to a base or support surface 103. The brake pedal 101 is mounted via a pivot axis 105 on the base 103 having a large surface area and weight to ensure that the brake system is supported in a stable manner.

The brake system is configured to communicate with a computer system running car simulation software. Communication between the brake system and the computer system could be via wires such as USB or via wireless communication such as Bluetooth. The communication between the brake system and the computer system is preferably in real-time to ensure that any actions on the brake pedal are immediately communicated to the car simulation software to minimize lag time and provide a realistic feel for the user using the simulation software. When pressing the brake pedal 101, a master cylinder piston 107 is pushed into the brake cylinder 201 and the brake pressure is then measured and communicated back to the computer system via the sensor 109. The sensor 109 is able to detect when, how much, and how fast pressure on the brake pedal is changed. The brake cylinder 201 is connected to the brake pedal 101 by a rod clevis 207 at the end of the piston rod 205 of the master cylinder piston 107 which grips around a mount plate 113 on the arm of the brake pedal 101.

A rod clevis 207 is a specific example embodiment of a brake cylinder connector, and the two terms will be used interchangeably and uses the same reference number 207.

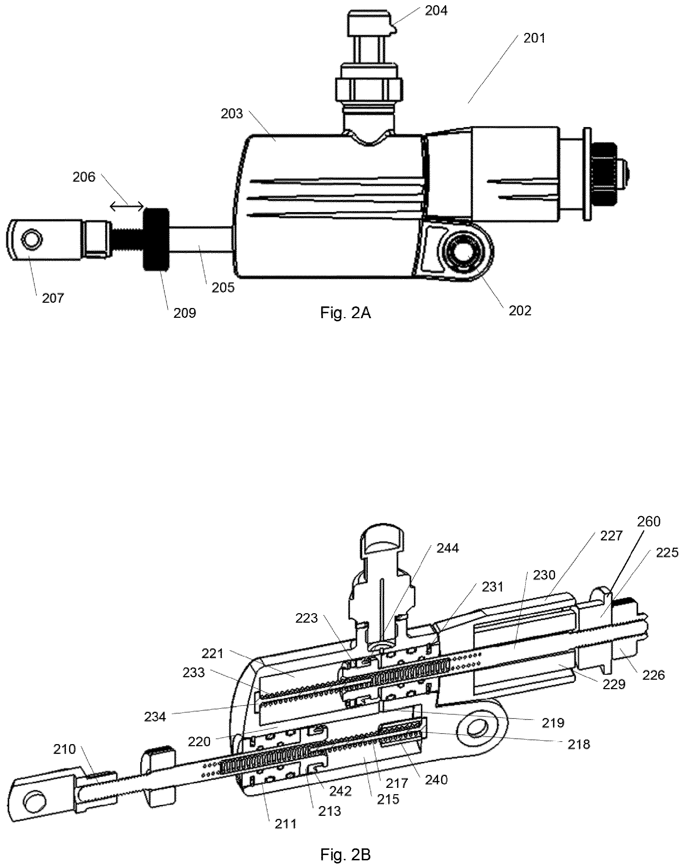

Figure 2A and 2B illustrate external and internal components of the brake cylinder 201. As seen in Fig. 2A, the brake cylinder 201 includes a brake cylinder housing 203 and an attachment opening 202 which can be used for mounting the brake cylinder 201 to a support system of the brake system such as the base 103. Further, at the top of the brake cylinder 201, a pressure sensor 204 is mounted for measuring pressure within the brake cylinder 201 and converting a pressure measurement into an electronic signal that can be sent to a processor of the automotive simulation system and be interpreted using the simulator software run on the processor to indicate the amount braking that should be applied to a vehicle simulated by the automotive simulation system (the electronic signal could be communicated either wireless or via wires).

As seen in Fig. 2A, attached through a lower part of the brake cylinder housing 203, a master cylinder piston 107 includes a master cylinder rod 205, a brake pedal connector 207, and a brake arm adjuster 209. The brake cylinder 201 is connected to the brake pedal 101 via the brake pedal connector 207 which may be in the form of, for example, a rod clevis. The brake arm adjuster 209 may be used for adjusting the slack in the pedal by increasing or decreasing the distance between the rod 205 and the connector 207 and for adjusting the position of the pedal 101 when not being pressed. The brake arm adjuster 209 can be used for adjusting the length of the master cylinder rod 205 by screwing the winding 210 at the end of the rod 205 either into or out of the winding 210 at the inner part of the rod clevis 207. When depressing the pedal 101 (as seen in Fig. 1) connected to the master cylinder rod 205 via the adjuster 209 and the connector 207, the master cylinder piston 107 is pushed into the brake cylinder housing 203 increasing the internal pressure of the brake cylinder 201.

It is the pressure increase in internal pressure caused by the depression of the pedal 101 which may be detected by a pressure sensor 204.

As seen in Fig. 2B, a master cylinder rod guide 211 is mounted inside the housing 203 for guiding the master cylinder rod 205 of the master cylinder piston 107 and allowing movement of the rod 205 only in an axial direction. The end of the master cylinder rod 205 disposed within the housing 203 includes a piston element 213 with a seal 242. The piston element 213 can move back and forth inside a master cylinder chamber 215 where a fluid (e.g., oil or other liquid) is present. The movement of the master cylinder piston element 213 is limited by the rod guide 211 and the stop member 240 at the opposite end of the master cylinder housing 203. The stop member 240 is to ensure that fluid cannot enter from the slave cylinder chamber 221 and behind the piston element 213. The stop member 240 should therefore have a length ensuring that the master piston 107 cannot be pressed to pass the openings 219 between master and slave chambers 215, 211. A master cylinder spring 217 is also present (where one end is inserted into a hollow end of the master cylinder rod 205 and the opposite end is inserted into the hollow stop member 240) that, when compressed, applies pressure between the stop member 240 and the rod 205 ensuring that the master cylinder piston element 213 moves back to a position associated with a released orientation when pressure on the pedal 101 has been released. The master cylinder spring 217 is mounted on an internal master cylinder rod guide 218 to keep the master cylinder spring 217 in place.

As seen in Fig. 2B, the cylinder 201 additionally includes a slave chamber 221. The slave chamber 221 and the master cylinder chamber 215 are elongated cavities that are disposed substantially parallel to each other and are separated from each other by a chamber dividing wall 220. One or more openings 219 are disposed within the wall 220 to allow for fluid communication between the master cylinder chamber 215 and the slave chamber 221.

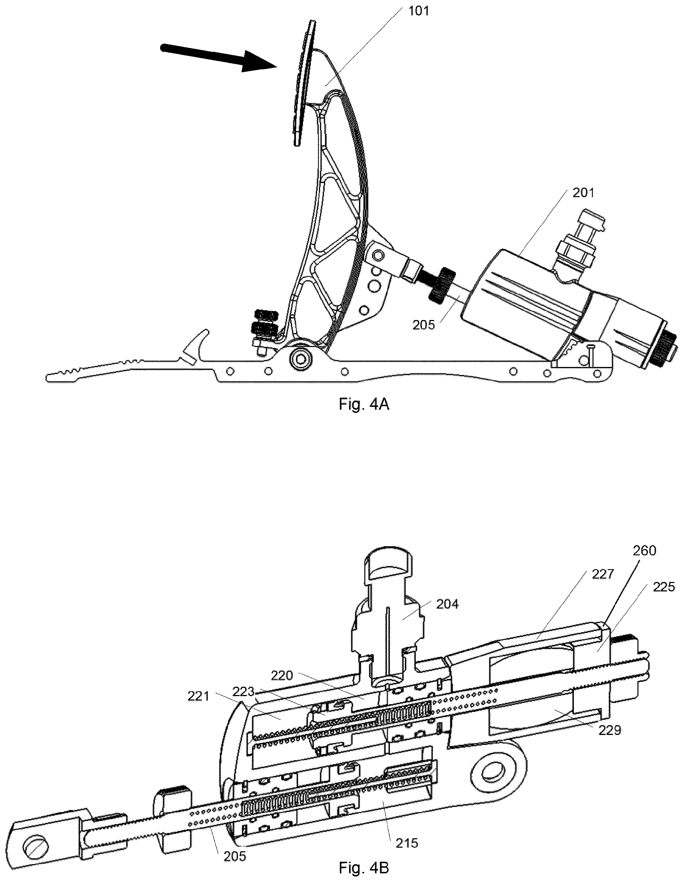

When the master cylinder piston element 213 is pressed towards the fluid inside the master cylinder chamber 215 (such as in the situation depicted in Figs. 4A and 4B), then the fluid in the chamber 215 is forced through the one or more openings 219 in the wall 220 between the two chambers 215, 221 and into the slave cylinder chamber 221. Fluid entering the chamber 221 via the one or more openings 219 increases the pressure within the chamber 221 and pushes a slave cylinder piston element 223 connected to a slave piston rod 230 in a direction opposite that of the master cylinder piston element 213. The dimensioning and number of openings 219 should be considered to ensure a sufficient flow between the two chambers 215, 221 when fluid is pressed from the master chamber 215 to the slave chamber 221. If the passage between the two chambers 215, 221 is too small, then a high pressure force is necessary to press fluid from the master chamber 215 to slave chamber 221. In one embodiment two openings 219 each having a diameter of around 1.5 mm may be used, but these openings 219 may be larger or smaller depending on the viscosity of the fluid.

The piston seal 242, 244 for each of the master cylinder piston element 213 and the slave cylinder piston element 223 may be a u gasket. When fluid is being pressed, the lips of the u gaskets 242, 244 are pressed towards the inner walls of the cylinder chambers 215, 221. As can be seen, the u gasket 244 of the slave piston element 223 is mounted opposite the u gasket 242 of the master piston element 213, since in the master cylinder chamber 215 the fluid is in front of the piston element 213, whereas in the slave cylinder chamber 221 fluid is between the slave piston element 223 and the slave rod guide 231. Due to the u gaskets' 242, 244 seal, air is present in the master chamber 215 behind the master cylinder piston 107 and in front of the slave cylinder piston 223. In the slave chamber 221, a hole should be present at the end to ensure air is allowed to leave and enter the chamber 221 as the slave piston 223 moves back and forth.

The end of the slave piston rod 230 distal to the master cylinder piston 107 is connected to an end bolt 226 and a block element 225 via windings at the end of the slave cylinder rod 230. When the slave cylinder piston 223 is pushed by the fluid entering the slave cylinder chamber 221, the block element 225 is dragged towards and into a brake cylinder damper housing 227 and moves with the piston 223 back and forth based on pressure provided by the fluid entering the slave cylinder chamber 221. Inside the damper housing 227, a dampener 229 is positioned between the block element 225 and an inner wall of the housing 227. The dampener 229 is made from flexible, elastic material (e.g., rubber, silicone, etc.), where the flexibility of the elastic material influences the perceived softness of the pedal 101 in use. For example, a dampener 229 with greater flexibility will result in the pedal 101 being perceived as softer than when a stiffer dampener 229 with less flexibility is used. Additionally, a threaded nut may be included on the slave piston 223 next to the block element 225 on the opposite side of the dampener 229. Manipulation of the threaded nut may be used to adjust the stiffness of the brake pedal 101. The block element 225 has an edge limiting how far the block element can move into the damper house and thereby how far the brake pedal can be pressed.

By the optional threaded nut being placed next to the block element 225 on the opposite side of the dampener 229 is understood that the block element 225 is arranged between the threaded nut 226 and the dampener 229. This threaded nut 226 is also called the end bolt 226. The arrangement of the end bolt 226 affects the default position of the block element 225 as screwing the bolt further onto the windings of the slave cylinder rod 230 such that the end bolt 226 is closer to the dampener 229 forces the end block 225 placed between the end bolt 226 and the dampener 229 towards the dampener 229. By changing the distance between the block element 225 and the damper housing, the travel range of the pedal in the first phase of the braking process is adjusted. The travel range is how far the pedal can be pressed before the mechanical stop 260 between the extending edge of the block element 225 and the damper housing 227 is engaged such that the further movement of the block element 225 is hindered whereafter the second phase of the braking process begins. During the movement of the block element 225 the dampener 229 is being deformed and the user needs to apply force to the brake pedal 101 to cause this deformation, this will give the user a feeling of resistance in the pedal. Once the edge of the block element is in contact with the damper housing 227 the resistance is no longer caused by the deformation of the dampener 229, but will be the hydraulic pressure related to compression of the fluid in the brake cylinder 201. Hence, the arrangement which allows the block element 225 to travel a distance before contacting the damper housing 227 gives the user a more realistic brake feel with two stages having significantly different resistance, i.e. requiring significantly different force to be applied by the user to the pedal. In the second phase the user will not feel the pedal move even as the pressure rises and detects increased braking force.

In the slave cylinder chamber 221, a slave rod guide 231 is mounted inside the housing 203 for guiding the rod of the slave piston 223 and allowing movement of the piston 223 in only the axial direction. The slave cylinder piston 223 can move back and forth inside the slave cylinder chamber 221 where the fluid (e.g., oil or other liquid) is present.

A slave cylinder spring 233 is also present that, when compressed, applies pressure between an inner wall of the chamber 221 and the piston 223 ensuring that the slave cylinder piston 223 moves back to a position associated with the released orientation when pressure on the pedal 101 has been released. The slave cylinder spring 233 is mounted on the internal slave cylinder rod guide 234 to keep the slave cylinder spring 233 in place.

As seen in Figs. 2A and 2B, the pressure sensor 204 is connected to and is in fluid connection with the chamber 221 and is configured to measure the pressure in the chamber 221 between the slave cylinder piston 223 and the slave rod guide 231.

In other equally preferred embodiments the pressure sensor 204 may be arranged to be in fluid connection with either the slave cylinder chamber 221 or the master cylinder chamber 215 at any position along the cylinder housing 203. In yet other embodiments the pressure sensor 204 mare be arranged spaced away from the cylinder housing 203 while still being in fluid connection with either the master cylinder chamber 215 or the slave cylinder chamber 221, e.g. by connection with a tube.

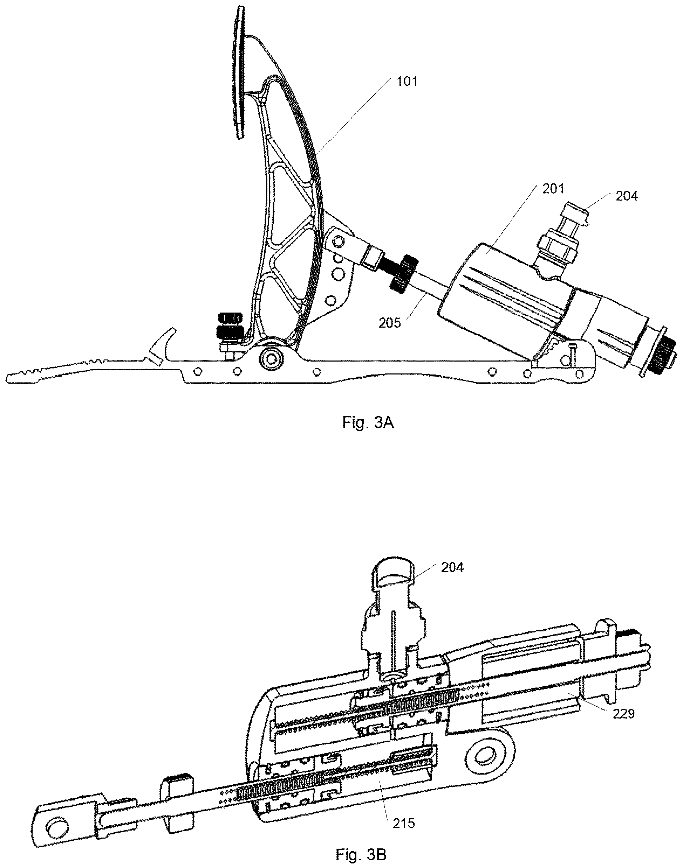

Figs. 3A and 3B illustrates the brake system in the released orientation, where the pedal 101 is not pressed. As seen in Fig. 3A, the pedal 101 is connected to the master piston rod 205 but there is no pressure on the pedal 101. Consequently, since no pressure is applied to the master piston rod 205 from the pedal 101, the fluid remains in the master cylinder chamber 215 and does not pass through the holes 219 and into the slave cylinder chamber 221. Accordingly, since no fluid is added to the chamber 221 from the chamber 215, the pressure sensor 204 measures no increased level of pressure. Because the pressure sensor 204 does not measure an increased level of pressure in the chamber 221, the processor of the automotive simulation system does not receive any signal indicative of braking.

Figs. 4A and 4B illustrates the brake system in a depressed orientation, where the pedal 101 is pressed.

As seen in Fig. 3A, the pedal 101 is connected to the master cylinder piston rod 205 and there is pressure on the pedal 101 (illustrated by black arrow). Consequently, since pressure is applied to the master piston rod 205 from the pedal 101, the fluid is pushed from the master cylinder chamber 215, through the holes 219, and into the slave cylinder chamber 221. Accordingly, since fluid has been added to the chamber 221 from the chamber 215, the slave cylinder piston 223 is pushed and an increased pressure of fluid in the area 221 in front of the slave cylinder piston 223 is measured by the pressure sensor 204. By means of the slave cylinder rod 230, when the slave piston 223 is pushed, it drags the block element 225 into the damper housing 227 and applies compressive pressure onto the dampener 229. The increased pressure causes the dampener 229 to deform which affects the movement of the slave cylinder piston 223 which again affects the entire brake system providing a feeling corresponding the feeling of a brake system in a vehicle. The deformation of the dampener 229 is an elastic deformation, and when the pressure is released, the dampener will regain its initial shape (i.e., the shape of the dampener 229 in an unloaded condition). Further the pedal 101 can be pushed no further due to the edge of the block element 225 being blocked by the edge of the damper housing 227. The resistance of the dampener 229 is felt by a user's foot on the pedal 101 and provides a tactile feedback similar to a brake of a real car. Because the pressure sensor 204 does measure an increased level of pressure in the chamber 221, the processor of the automotive simulation system receives a signal from the sensor 204 indicative of braking. Because the amount of increased pressure measured by the sensor 204 can vary with the amount of pressure applied by a user's foot on the pedal 101, the signal from the sensor will be indicative of the amount of braking that a user is applying to the pedal 101.

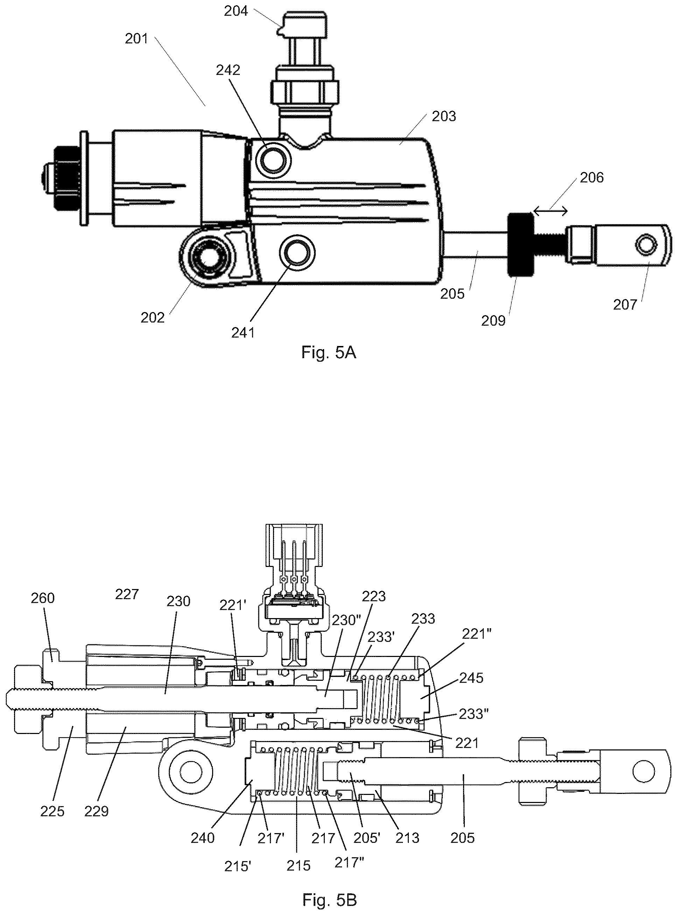

Figs. 5A and 5B illustrates an alternative preferred embodiment of the brake cylinder 201. In Fig. 5A shown from the outside and in Fig. 5B shown in schematic cross-sectional view. The working principle is the same as in the previously described embodiments, the Figs. 5A and 5B simply illustrate alternative arrangements of some of the features of the brake cylinder 201 and they may be used either in combination as in the illustration or having either separately incorporated in the previously described embodiments.

Fig. 5A illustrates a brake cylinder 201 for use with a pedal 101 of a brake system for driving simulation according to the invention. Same as for the other example embodiments the brake cylinder 201 comprises a cylinder housing 203, an attachment opening 202 for connecting the brake cylinder 201 to a support surface 103, and a master cylinder rod 205 for connecting the brake cylinder 201 to a brake pedal 101 via a brake pedal connector 207. In a preferred embodiment the master cylinder rod 205 is connected to the brake pedal connector 207 via a brake arm adjuster 209 which has a winding allowing for the adjustment of the distance 206 between the brake cylinder rod 205 and the brake pedal connector 207. In other embodiments the brake cylinder rod 205 and brake pedal connector 207 may be connected by other means such as but not limited to the master cylinder rod 205 and the brake pedal connector 207 being integrated, being welded together or releasably connected through winding or being screwed together by a transverse screw and bolt.

In some preferred embodiments as illustrated in Fig. 5A the brake cylinder 201 is equipped with a first external channel connecter 241 for fluidically connecting a first end of an external channel (not shown) to the master cylinder chamber 115 and a second external channel connector 242 for fluidically connecting a second end of an external channel (not shown) to the slave cylinder chamber 221. In some embodiments the external channel is a tube directly connecting the first 241 and second external channel connector 242 and enabling the exchange of fluid between the master cylinder chamber 215 and the slave cylinder chamber 221. In some embodiments an external channel connected to the first external channel connector 241 and the second external channel connector 242 replaces the one or more holes 219 while serving the same purpose of enabling fluid exchange between the chambers 215,221 when pressure is applied and the master cylinder piston element moves. In other embodiments the brake cylinder 201 may comprise a first external channel connector 241, a second external channel connector 242 and an external channel in addition to one or more holes 119 in the separating wall 220 between the master cylinder chamber 115 and the slave cylinder chamber 221. The number and dimensioning of the external channel and/or the one or more holes 119 may be adapted between different embodiments of the brake cylinder 201 to control the flowrate and resistance of the system. In some embodiments the external channel may connect the master cylinder chamber 215 and the slave cylinder chamber 215 via one or more other pieces of equipment such as but not limited to diagnostics tools, pressure sensors and/or filters.

Fig. 5B illustrates a preferred embodiment having a solid separating wall 220, separating the master cylinder chamber 15 and the slave cylinder chamber 221, by solid is understood that the wall does not have one or more holes or other breaches allowing fluid communication between the chambers 115,221 through the separating wall 220. In such an embodiment the master cylinder chamber 215 and the slave cylinder chamber 221 are in stead in fluid communication through an external channel connected to the chambers via external chamber connectors (not visible in the cross-sectional view). In a preferred embodiment the first external channel connector connects the external channel to the master cylinder chamber 215, near the first end of the master cylinder chamber 215', that is between the master cylinder piston element 213 and the end wall at the first end of the master cylinder chamber 215'. In a preferred embodiment the second external channel connector connects the external channel to the slave cylinder chamber 221 near the first end of the slave cylinder chamber 221, i.e. between the slave piston element 223 and the damper housing 227.

The embodiment illustrated in Fig. 5B further differ from the previously illustrated embodiments in that the master cylinder rod 205 is solid and that the piston element 213 is releasably connected to the master cylinder rod 205 by means of an external winding on the first end of the master cylinder rod 205' and an internal winding in a recess of the master cylinder piston element 213. In an alternative embodiment the master cylinder rod 205 may comprise a recess with internal winding which may connect to an external winding on a protrusion on the the master cylinder piston element 213. In yet other embodiments the master cylinder rod 205 may be connected to the master cylinder piston element 213 by other known means such as a press fit or gluing.

In some preferred embodiments the slave cylinder piston element 223 is similarly connected to the slave cylinder rod 230 by the second end of the slave cylinder rod 230" extending into a hollow of the slave cylinder piston element 223. In some preferred variants the slave cylinder rod 230 will further be connected to the slave cylinder piston by a winding or by other known means of connection.

In some preferred embodiment as illustrated in Fig. 5B a master cylinder spring 217 is arranged between the first end of the master cylinder chamber 115' and the master cylinder piston element 213. In a preferred embodiment the first end of the master cylinder spring 217' is arranged to contact and be guided by a master cylinder stop member 240 arranged at the first end of the master cylinder chamber 215'. The master cylinder spring 217 may be guided by the master cylinder stop member 240 by being arranged such that at least part of the first end of the master cylinder spring 217' encircles the master cylinder stop member 240, in such an embodiment the master cylinder stop member 240 may be solid. Alternatively the master cylinder spring 217 may be guided by the master cylinder stop member 240 by having at least part of the first end of the master cylinder spring 217' arranged inside a hollow of the master cylinder stop member 204. The second end of the master cylinder spring 217" is arrange to contact the master cylinder piston element 213. In a preferred variant at least part of the second end of the master cylinder spring 217" is arranged to encircle at least part of the master cylinder piston element 213 such that the master cylinder piston element 213 may act as a guide for the master cylinder spring 217. By something acting as a guide for a spring is understood that it limits the movement of the spring, such that the end of the spring does not significantly change position in the direction perpendicular to the axis of the chamber in which the spring is arranged.

In alternative equally preferred embodiments wherein there is no master cylinder stop member, the first end of the master cylinder spring 217 is arranged to contact the end wall at the first end of the master cylinder chamber 217'. In such cases the first end of the master cylinder spring 217' may be mounted in or otherwise connected to the end wall at the first end of the master cylinder chamber 217'.

In some preferred embodiments the slave cylinder spring 233 may similarly be mounted between the slave cylinder piston element 223 and the end wall at the second end of the slave cylinder chamber 221" or a slave cylinder stop element 245 mounted at said end wall. In a preferred embodiment the slave cylinder spring 233 is mounted such that the first end of the slave cylinder spring 233' is guided by the slave cylinder piston element 223, e.g. by at least part of the first end of the slave cylinder spring 233' encircling at least part of the slave cylinder piston element 223. In a preferred embodiment the second end of the slave cylinder spring element 221" is guided by a slave cylinder stop element 245, e.g. by at least a part of the second end of the slave cylinder spring element 221" being arranged to encircle at least a part of the slave cylinder stop element 245. In an alternative equally preferred embodiment where there is no slave cylinder stop element 245 comprised in the slave cylinder chamber 221 the second end of the slave cylinder chamber spring 233" is mounted in or otherwise connected to the end wall at the second end of the slave cylinder chamber 221".

Same as for the previously described embodiments the brake cylinder 201 of Figs. 5A-5B function by the exchange of fluid between the master cylinder chamber 215 and the slave cylinder chamber 221 and the increased pressure within the brake cylinder 201. Hence, it is understood that all the elements have the same functionality, i.e. the external channel has the same functionality as the one or more holes in the separating wall, the springs 217, 233 maintain the same functionality as does the differently mounted piston elements 213,223. Namely, when a user applies pressure to the pedal, pressure is transferred via the master cylinder rod 205 to the master cylinder piston element 213. The master cylinder piston element 213 compresses the master cylinder spring 217 and displaces fluid from the master cylinder chamber 215 through an external channel and into the slave cylinder chamber 221. In the slave cylinder chamber 221 the addition of the displaced fluid in turn moves the slave cylinder piston element 223 in direction of the second end of the slave cylinder chamber 221" compressing the slave cylinder spring 233. The slave cylinder piston element 223 being connected to the slave cylinder rod 230 causes movement of the slave cylinder rod 230 which in turn moves the block element 225 towards the dampener 229 causing elastic deformation of the damper 229. The action of the users applying pressure to the pedal causes an increase of pressure within the brake cylinder 201, which can be detected by a pressure sensor, which in turn can send a signal to the processing unit of a driving simulator. When the user releases the pressure on the pedal the forces of the compressed springs 215,233 will act upon the piston elements 213,223 moving them back to a default position associated with released orientation of the system.

As the effects of the components remain the same and interact in the same manner, in the various embodiment the skilled person would understand that it is possible to use these elements in combination without changing the essence of the invention and should not be construed as limited to the particular combinations shown in the illustrations. For example the spring arrangement illustrated in the embodiment of Fig. 5B may be used in a an embodiment having one or more holes in the separating wall 220, or either or both piston elements may be mounted to the master cylinder rod and/or the slave cylinder rod respectively in an embodiment having the spring mounted inside the hollow of the rod. In preferred embodiments the arrangement of rods, piston elements and springs are the same in both the master cylinder chamber 215 and the slave cylinder chamber 221, but in alternative variants the arrangement may differ in the two chambers.

In the embodiments illustrated in Figs. 1-5 the master cylinder rod 205 and the slave cylinder rod 230 are arranged substantially parallel and at the same time staggered such that the slave cylinder rod 230 extends further towards the front than the master cylinder rod 205 does. In such a configuration the damper housing is arranged at the front end of the brake cylinder 201, i.e. connected to and extending from the first end of the slave cylinder chamber 221'. Such an embodiment may be considered a pull configuration as the depression of the pedal leads to the block element attached to the slave cylinder rod 230 being pulled towards the dampener 229.

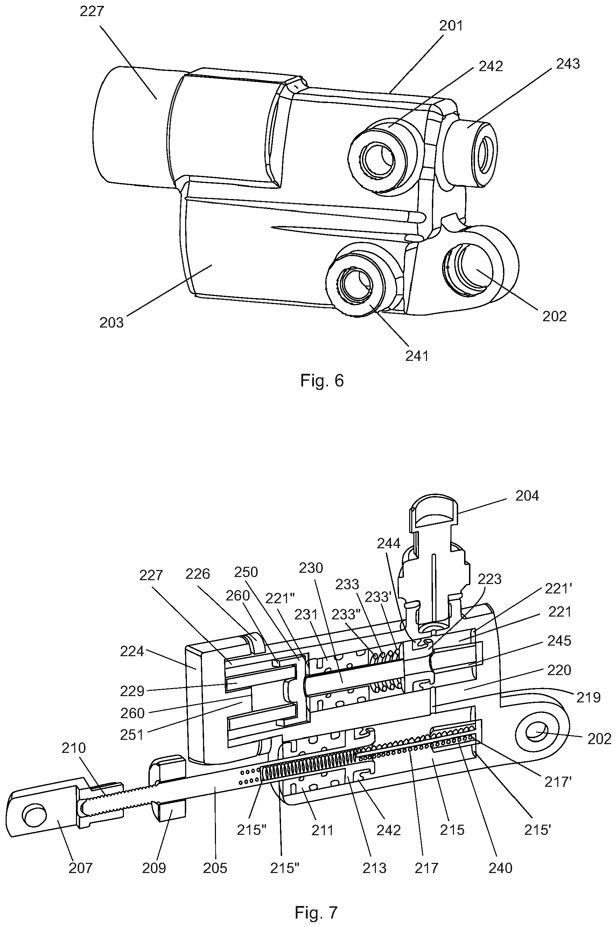

Figs. 6 and 7 illustrate alternative embodiments of the brake system which is based on the same working principle but arranged in a push configuration, wherein depression of the brake pedal 101 and the displacement of fluid from the master cylinder chamber 215 to the slave cylinder chamber 221 leads to the slave cylinder rod 203 pushing the block element towards the dampener 229. In other words in such a configuration the damper piston which may be seen as equivalent to the block element is positioned on the side of the dampener 229 facing the slave cylinder piston element 223. In such a push configuration damper housing may be arranged at the second end of the slave cylinder chamber 221", i.e. adjacent to the entry of the master cylinder rod 205 into the second end of the master cylinder chamber 215". A brake cylinder 201 according to the variant illustrated in Figs. 6A and 6B may be used with a pedal 101 in the same manner as disclosed for the previous embodiments by replacing the brake cylinder 201 of the previous embodiment. In a preferred embodiment of the push configuration brake cylinder 201 it comprises an attachment opening 202 for releasably connecting the brake cylinder 201 to a support surface 103 such as a mount plate 113 and a brake pedal connector 207, such as a rod clevis, for connecting the brake cylinder 201 to a mount plate 113 of the brake pedal 101.

Fig. 6 is an external view of a brake cylinder housing 203 having damper housing 227 arranged at the opposite end of the attachment opening 202. The illustrated embodiment comprises a first external channel connector and a second external channel connector for connecting an external channel for bringing a master cylinder chamber and a slave cylinder chamber in fluid communication. In the embodiment illustrated in Fig. 6 a pressure sensor may be connected in the external channel rather than directly to the cylinder housing 203. Alternatively the pressure sensor may be connected directly to a chamber through the cylinder housing 203. It could for example be through an external connector 243 made in the housing for that purpose. It is to be understood that while the external connector 243 is in Fig. 6 shown as being connected to the slave cylinder chamber, the pressure sensor is not restricted to be connected to any particular chamber or in any particular position as the pressure in the closed hydraulic system remains the same through the system and may be measured at any point.

Fig. 7 is a schematic illustration of the internal component of an alternative embodiment of the brake cylinder 201.

As seen in Fig. 7 the brake cylinder 201 includes a brake cylinder housing. Similar to the other embodiments the brake cylinder housing comprises a master cylinder chamber 215 and a slave cylinder chamber 221, the two chambers 215,221 each being an elongated cavity which are disposed substantially parallel to each other. The master cylinder chamber 215 and the slave cylinder chamber 221 are separated by a chamber dividing wall 220. One or more openings 219 are disposed within the wall 220 to allow for fluid communication between the master cylinder chamber 215 and the slave chamber 221.

A master cylinder rod guide 211 is arranged for guiding a master cylinder rod 205 of the master cylinder piston and allowing movement of the rod 205 only in an axial direction. In some variants the master cylinder rod guide 211 may be mounted inside the master cylinder chamber 215 in some other variants the master cylinder rod guide 211 may be mounted adjacent to and/or abutting the master cylinder chamber. The first end of the master cylinder rod 205' is disposed within the master cylinder chamber 215 and contacts a piston element 213, the piston element 213 being equipped with a seal 242. In some variants the master cylinder rod 205 may be connected to the piston element 213, for example by means of threading allowing the piston element 213 to be releasably connected with the master cylinder rod 205 by screwing the piston element 213 onto the master cylinder rod 205. In other variants the master cylinder rod 205 may be abutting the piston element 213 and being arranged such that they may be in contact. The piston element 213 is adapted to move back and forth inside the master cylinder chamber 215 along the direction of the longitudinal axis of the master cylinder chamber 215. The master cylinder rod 205 is arranged such that the movement of the master cylinder rod affects the movement of the piston element 213. A stop member 240 may be located at the first end of the master cylinder chamber 215', i.e. the end of the master cylinder chamber 215 opposite the end at which the master cylinder rod 205 enters the master cylinder chamber 215 which in turn is the second end of the master cylinder chamber 215". The movement of the master cylinder piston element 213 is limited by the rod guide 211 and either the stop member 240 or the first end of the master cylinder chamber 215'. The rod guide 211 limits the movement of the master cylinder rod 205 to be along the axis of the master cylinder chamber 215. In embodiments having the stop member 240, it limits how far the master cylinder piston element 213 can travel inside the master cylinder chamber 215. In a preferred variant the stop element 240 is adapted to ensure that the master cylinder piston element cannot move past the one or more openings 219 such that fluid from the slave cylinder chamber 221 cannot enter the master cylinder chamber 215 behind the master cylinder piston element 213. This is achieved by the length of the stop member 240 being such that it ensures that the master cylinder piston element 213 cannot be extended past the opening 219 between the master and the slave chambers 215, 211. In embodiments having no stop member 240, the distance which the master cylinder piston element 213 can travel is limited by the first end of the master cylinder chamber 215' and the dimensions of the piston element 213 itself, in particular the length of the piston element 213. In preferred variants of such embodiments with no stop member 240, the placement of the one or more openings 219 and the length of the piston element 213 are such that the entirety of the master cylinder piston element 213 cannot be extended past the opening 219 between the master and the slave chambers 215, 211 such that fluid cannot enter the space between the second end of the master cylinder chamber 215" and the master cylinder piston element 213.

A master cylinder spring 217 is arranged within the master cylinder chamber 215. A first end of the master cylinder spring 217' is disposed at the first end of the master cylinder chamber 215'. In some embodiments having a stopper member 240 arranged at the first end of the master cylinder chamber 215' the first end of the master cylinder spring 217' may be arranged within a hollow opening of the stop member 240. In other variants the embodiment having a stopper member 240 arranged at the first end of the master cylinder chamber 215' the first end of the master cylinder spring 217' may be arranged such that the first end of the master cylinder spring 217' encircles the master cylinder stopper member 240. In other embodiments wherein the master cylinder chamber 215 comprises no stopper member the first end of the master cylinder spring 217' is preferably at least partially arranged within a cavity in the end wall of the first end of the master cylinder chamber 215'. In another variant the first end of the master cylinder spring 217' is arranged to abut the end wall at the first end of the master cylinder chamber 215'.

In some preferred embodiments the second end of the master cylinder spring 217" opposite of the first end of the master cylinder spring 217' is disposed within a hollow opening of the master cylinder rod 205 such that at least part of the master cylinder spring 217 extends through the body of the master cylinder piston element 213.

In alternative preferred embodiments the master cylinder rod 205 is solid and the second end of the master cylinder spring 217" is guided by the piston element 213. In such embodiments the second end of the master cylinder spring 217" may be arranged within a hollow section of the master cylinder piston element 213 such that at least part of the master cylinder spring 217 is encircled by part of the master cylinder piston element 213. In such a configuration the second end of the master cylinder spring 217" may abut the first end of the master cylinder rod 205' if a central channel extends throughout the body of the piston element 213, such a channel may for example be equipped with internal threading for connecting the piston element 213 to the master cylinder rod 205. In alternative variants of such embodiments the second end of the master cylinder spring 217" may be disposed to surround part of the master cylinder piston element 213. In these configuration the master cylinder piston element 213 guides the second end of the master cylinder spring 217" by restricting its movement in the radial direction within the master cylinder chamber 215, that is in any other direction than the axial direction of the master cylinder chamber 215.

When force is applied to the master cylinder rod 205, i.e. when a user applies pressure to the pedal, such that the master cylinder rod 205 moves further into the master cylinder chamber 215, i.e. in the direction from the second end of the master cylinder chamber 215" towards the first end of the master cylinder chamber 215', , the master cylinder spring 217 is compressed. The forces of the compressed master cylinder spring 217 applies force to the points of contact at the first 217' and second end of the master cylinder spring 217". At the first end of the master cylinder spring 217' pressure is applied to the contact point at the end of the master cylinder chamber 215', i.e. the stop member 240 or the end wall at the first end of the master cylinder chamber 215'. At the second end of the master cylinder spring 217" pressure is applied to the contact point at the master cylinder rod 205 and/or the master cylinder piston element 213 such that the spring force is applied to the master cylinder rod 205 either directly or transmitted to the master cylinder rod 205 via the master cylinder piston element 213.

The force from the master cylinder spring 217 acts upon the master cylinder rod 205 to move it back to a position associated with a default position of the master cylinder rod 205 associated with no pressure being applied by a user to the pedal 101. In other words by the default position is understood the unloaded position of the brake and brake cylinder.

In some embodiment the master cylinder spring 217 may be mounted around an internal master cylinder rod guide 218 to keep the master cylinder spring 217 arranged as intended. In other embodiments the master cylinder spring 217 will be guided to stay in the intended position by the master cylinder piston element 213 and/or the master cylinder stop member 240 and/or a cavity in the end wall of the first end of the master cylinder chamber 217'.

Similar to the configuration in the master cylinder chamber 215, the slave cylinder chamber 221 comprises a slave cylinder rod guide 231 mounted inside the slave cylinder chamber 221 for guiding a slave cylinder rod 230 and allowing movement of the slave cylinder rod 230 only in an axial direction substantially parallel to the axis of movement of the master cylinder rod 205. At least part of the slave cylinder rod 230 is disposed within the slave cylinder chamber 221. The slave cylinder rod 230 is arranged such that the first end of the slave cylinder rod 230' contacts a slave cylinder piston element 223. In some embodiments the slave cylinder rod 230 may comprise an integrated slave cylinder piston element 223 at the first end of the slave cylinder rod 230'. In other embodiments the first end of the slave cylinder rod 230' may be releasably connected to the slave cylinder piston element 223 for example by both components comprising threading such that they may be releasably connected by screwing the slave cylinder piston element 223 onto the first end of the slave cylinder rod 230'. In yet other alternative embodiments the slave cylinder rod 230 is arranged such that the first end of the slave cylinder rod 230' abuts and is in contact with the slave cylinder piston element 223. The slave cylinder piston element 223 has a slave cylinder seal 244 arranged around the body of the slave cylinder piston element 223 to create a fluid tight seal between the volumes of the slave cylinder chamber separated by the cylinder piston element 223. The slave cylinder piston element 223 is adapted to move back and forth inside the slave cylinder chamber 221 along the direction of the longitudinal axis of the slave cylinder chamber 221. A slave cylinder stop member 245 may be located at the closed first end of the slave cylinder chamber 221'. Alternatively the slave cylinder piston may stop against the end wall of the first end of the slave cylinder chamber 221'. The movement of the slave cylinder piston element 223 within the slave cylinder chamber 221 along the axis of the slave cylinder chamber 221 is at the second end of the slave cylinder chamber 221" limited by the rod guide 231 and at the first end of the slave cylinder chamber 221' it is limited either by the slave cylinder stop member 245 or alternatively by the end of the slave cylinder chamber. The slave cylinder rod guide 231 optionally in combination with slave cylinder spring 233 limits the movement of the slave cylinder rod 230 to be along the axis of the slave cylinder chamber 221.

In a preferred embodiments the slave cylinder piston element 223 is arranged such that it cannot translate past the one or more openings 219 such that fluid from the master cylinder chamber 215 cannot enter the slave cylinder chamber 221 behind the slave cylinder piston element 223, i.e. on the side of the slave cylinder piston element 223 closest to the second end of the slave cylinder chamber 221". In embodiment comprising a slave cylinder stop element 245, this is achieved by the length of the slave cylinder stop member 245 and the dimensions of the slave cylinder piston element 223 being such that it ensures that the slave cylinder piston element 223 cannot be extended past the opening 219 between the master and the slave chambers 215, 211. In embodiments where the travel range of the slave cylinder piston element 223 is limited by the end wall at the first end of the slave cylinder chamber 221', it is achieved by the dimensions, in particular the length of the slave cylinder piston element 223 along the axis of the slave cylinder chamber, being adapted to cover all one or more holes 219 when the slave cylinder piston element 223 contacts the end wall at the first end of the slave cylinder chamber 221'.

In some preferred variants of embodiments having both a master and a slave stop members 240,245, the dimensions of the master and the slave stop members 240,245 as well as the dimensions of the master and the slave piston element 213, 223 are the same. In other preferred variants the dimensions of the components of the master cylinder chamber 215 and the slave cylinder chamber 221 may however vary. In yet other variants the a stop member 240,245 may be present in either the master cylinder chamber 215 or the slave cylinder chamber 221 while there is no stop member 240,245 in the other chamber 215,221.

A slave cylinder spring 233 is arranged within the slave cylinder chamber 221 such that the spring forces of the slave cylinder spring 233 acts upon the slave cylinder piston element 223 to bring it back to a default position corresponding to no pressure being applied by the user. In a preferred embodiment the first end of the slave cylinder spring 233' is arranged to contact the end of the slave cylinder piston element 223 facing the second end of the slave cylinder chamber 221' and the second end of the slave cylinder spring 233 opposite of the first end is disposed at the slave cylinder rod guide 231.

When force is applied to the slave cylinder rod 230 such that the slave cylinder rod 230 translates in the direction from the first end of the slave cylinder chamber 221' towards the second end of the slave cylinder chamber 221, i.e. by a user applying pressure to the pedal, the slave cylinder spring 230 is compressed. The forces of the compressed slave cylinder spring 233 applies force to the slave cylinder piston element 223 and the slave cylinder rod guide 231 such that the slave cylinder rod 230 moves back to a default position of the slave cylinder rod 230 associated with no pressure being applied by a user to the pedal 101. In a preferred embodiment the slave cylinder spring 230 is mounted around an internal slave cylinder rod to keep the slave cylinder spring 233 in place.

The second end of the slave cylinder rod 230", i.e. the end opposite the end arranged to contact the slave cylinder piston element 223, is arranged in contact with a damper piston 250. In some variants the damper piston 250 may be connected to the slave cylinder rod 230, e.g. they may be comprised of a single piece of material or they may be assembled from two component that are fixed together or releasably connected. In other variants the slave cylinder rod 230 may simply be arranged to be capable of physically contacting the damper piston 250 without the two components being connected such that force may be transferred from the slave cylinder rod to the damper piston 250.

A slave cylinder cap 224 is mounted at the second end of the slave cylinder 221". In a preferred embodiment the slave cylinder cap 224 has an internal thread such the that the cap can apply a an adjustable and variably mechanical pressure on the damper 229. The adjustable position of the cap may further contribute to adjusting the travel range of the pedal in the first phase of the braking process before the mechanical stop 260 is engaged. The end bold 226 locks the cylinder cap 224 in place once it is in the desired position.

Equivalent to the previously described embodiments the region of the slave cylinder from the slave cylinder cap 224 to the damper piston 250 may be considered the damper housing. The chamber within the damper housing wherein the damper piston 250 is located may in some variants be wider than the slave cylinder chamber 221.

In a preferred variant a damper 229 is located between the damper piston 250 and a damper bracket 251224. In preferred variants the one or more dampeners 229 are hollow cylinder-shaped elongated pieces of resilient material that are dimensioned such that when the system is in the relaxed default position the uncompressed dampener 229 extend from the damper piston 250 to the slave cylinder bracket 251. In other variants the one or more dampeners 229 may be a solid elongated piece of resilient material. In such variants having one or more solid dampers 229, each solid damper 229 preferably has a depression in either or both ends for engaging part of the damper piston 250 and/or damper bracket 251. In embodiments with a single solid dampener 229, the dampener is preferably mounted such that a flange of the damper piston 250 extends around a first end of the dampener 229 and a flange of the damper bracket extends around the second end of the dampener 229, such that when the dampener 229 is sufficiently compressed the flanges will come in mechanical contact and form a mechanical stop enabling the two-phase braking process. The resilient material of the dampener 229 may for example be rubber, silicone or similar known materials that are flexible and elastic. The resilient properties of the material, i.e. the force required to deform a dampener 229, influences the perceived softness of the pedal 101 in use. The less force is required to deform and/or compress the dampener 229 the softer the pedal 101 will be perceived by the user as less force will be required for a response. By the one or more dampeners 229 being elongated is to be understood that in such preferred variants they are longer in the axial direction of the slave cylinder chamber 221 than they are wide in the transverse direction. In a preferred embodiment such an elongated dampener 229 is cylinder-shaped. In a more preferred embodiment such an elongated dampener 220 is hollow which is a cylinder shaped hollow opening in a cylinder shaped resilient material, i.e. it is a resilient sidewall of a cylinder shape.

In a preferred embodiment the shape of the damper piston 250 is such that a protrusion extends at least partially into the hollow opening of the cylinder-shaped dampener, thereby fixating and guiding the direction in which the damper 229 is bend it is deformed under pressure from the damper piston 250. In some preferred variants the damper piston 250 may further comprise outer edges extending partially along the length of the of the dampener 229 for further fixating and controlling the dampener position. Furthermore the protrusion of the damper piston 250 may in some embodiments serve as a mechanical stop 260, limiting the travel range of the pedal 101 as well as limiting the compression of the damper 229 as the damper piston 250 can travel no further than to where the protrusion contacts the damper bracket 251 or the slave cylinder cap 224. A damper bracket 251 is placed between the damper 229 and the slave cylinder cap 224. The shape of the damper bracket 251 is such that a protrusion extends in the hollow opening of the cylinder-shaped dampener, thereby fixating and guiding the direction in the damper 229 is bend it is deformed under pressure from the damper piston 250. In some preferred variants the damper bracket 251 may further comprise outer edges extending partially along the length of the of the dampener 229 for further fixating and controlling the dampener position. Furthermore the protrusion of the damper bracket 251 may in some embodiments serve as a mechanical stop 260, limiting the travel of the pedal 101 as well as limiting the compression of the damper 229. In a preferred embodiment damper piston 250 and damper bracket 251 are identical parts arranged with mirrored orientation.

The protrusion of the damper piston 250 optionally in combination with a protrusion of the damper bracket 251 or of the slave cylinder cap 224 provides a mechanical stop 260 which limits the travel range of the damper piston 250. Due to this limitation of the travel range of the damper piston 250 the user may experience two phases with different resistance when pressing the brake pedal. The first braking phase is experienced when the damper piston 250 is translating under the force of the pedal depression and the resistance is due to the deformation of the dampener 229. The second braking phase is experienced if the user continues to apply pressure after the protrusion of the damper piston 250 is in mechanical contact with the damper bracket 251, in this case the resistance the user will feel is due to the hydraulic pressure within the brake cylinder, that is from compressing the fluid within the brake cylinder system.

In an alternative embodiment the damper bracket 251 and the slave cylinder cap 224 is an integral part as shown in Fig. 7.

In embodiments having multiple dampers 229 the damper piston 250 may have multiple protrusions for engaging the hollows of each damper 229. In such embodiments the damper piston 250 may further comprise protrusions extending between neighbouring dampers to further guide their bending during compression. Protrusions extending between neighbouring dampers 229 may also be present in embodiments where one or more dampers are made from a solid piece of resilient material, i.e. without a hollow extending through the damper.

During operation of the brake cylinder 201, applying pressure to the pedal 101 will lead to the master cylinder rod 205 being moved from its default position and translating further into the master cylinder chamber 215 towards the first end of the master cylinder chamber 215'. This movement of the master cylinder rod 205 leads to the master cylinder piston element 213 also translating in the direction towards the first end of the master cylinder 115', thereby exerting a force on a fluid inside the master cylinder chamber 215 (similar to the situation described for the former embodiment and illustrated in Figs. 4A and 4B). This movement of the master cylinder piston element 213will force at least some of the fluid from the master cylinder chamber 215 through the one or more openings 219 into the slave cylinder chamber 221. Fluid entering the slave cylinder chamber 221 via the one or more openings 219 increases the pressure within the slave cylinder chamber 221 and exerts a force on the slave cylinder piston element 223 forcing it in a direction opposite that of the master cylinder piston element 213. By the slave cylinder piston element 223 moving in a direction opposite that of the master cylinder piston element 213 is understood that it moves along an axis parallel to the axis of movement substantially parallel to the axis of movement of the master cylinder piston element 213 but towards the opposite end of said axis than the end which the master cylinder piston element 213 moves towards, i.e. in the direction from the first end of the slave cylinder chamber 221' towards the second end of the slave cylinder chamber 221". The dimensions of the one or more openings 219 as well as the number of openings present 219 is adapted to control the flow of fluid exchange between the master cylinder chamber 215 and the slave fluid chamber 221 and thereby affect the force which must be applied to the master cylinder rod 205 to cause the slave cylinder piston element 223 to move, hence the dimensioning and number of openings 219 may vary between different embodiments of the invention. In particular it may be necessary to adapt the dimensioning and number of openings 219 depending on the fluid used, e.g. depending on the viscosity of that fluid.

In one exemplary embodiment there may be two openings 219 each having a diameter of around 1.5 mm.

While the previously described embodiments have referred to one or more openings 219 in the wall 220 separating the master cylinder chamber 215 and the slave cylinder chamber 221, in other embodiments the fluidic exchange between the master cylinder chamber 215 and the slave cylinder chamber 221 may be through a differently arranged channel. For example the fluidic connection may be through a tube connecting the master cylinder chamber 215 and the slave cylinder chamber 221 externally of the brake cylinder 201. Such a configuration may be beneficial as it allows inspection of the fluid, e.g. through a transparent tube. The tube may also be connected through another device allowing treatment or affecting of the fluid. Furthermore it enables exchanging of the tube, e.g. to change its length or in case the tube is damaged or clogged. In yet another alternative embodiment the master cylinder chamber 215 and the slave cylinder chamber 221 may be fluidically connected though a channel arranged in the outer wall of the brake cylinder rather than in the wall 220 separating the chambers 215,221. Hence, the holes 219 should be interpreted as a specific embodiment of any type of channel arranged to fluidically connect the master cylinder chamber 215 and the slave cylinder chamber 221.

When the slave chamber piston element 223 is forced to move, it transfers force to the damper piston 250 which in turn is pressed in the same direction as the slave chamber piston element 223 moves, i.e. towards the dampener 229, the damper bracket 251 and the slave cylinder cap 224. This movement will lead to the compression and/or deformation of the dampener 229. The amount of force needed to elastically deform the dampener 229 depends on the material of choice of the dampener and may vary between embodiments to allow for different load of different brake cylinders to match user preference.

Simultaneously with the movement of the components of the brake cylinder 201 pressure is increased within the master cylinder chamber 215 and the slave cylinder chamber 221.

A pressure sensor 204 may be connected to and in fluid communication with the slave cylinder chamber 221 or the master cylinder chamber 215. There may be further openings in the cylinder chambers for fluid communication of other devices. The pressure sensor 204 is configured to measure the pressure in the brake cylinder 201. The pressure reading from the pressure sensor 204 may then be transmitted to the simulator and correlated to a braking force within the simulation. In the default position corresponding to no pressure being applied to the pedal (such as in the configuration shown on Fig. 3A) there is no elevation of the pressure detected by the pressure sensor 204 and thus the processor of the automotive simulation system does not receive signal indicative of braking activity. In preferred embodiments of the invention the automotive simulation the braking effect achieved for a given detection of the sensor may be adjusted based on user preference and/or other factors of the simulation such as grip on a simulated surface and/or the type of vehicle simulated, i.e. the correlation between the detected pressure and the simulated braking effect may be adjustable.

Upon release of the pedal, i.e. when the user no longer applies pressure to the pedal, the brake cylinder system will return to its default position under the spring forces of the master cylinder spring 217, the slave cylinder spring 233, and the dampener 229 as the dampener 229 is decompressed, these forces move the slave chamber piston element 223 and the master cylinder piston element 213 back to their default position thereby also moving fluid which had been forced into the slave cylinder chamber 221 back into the master cylinder chamber 215.

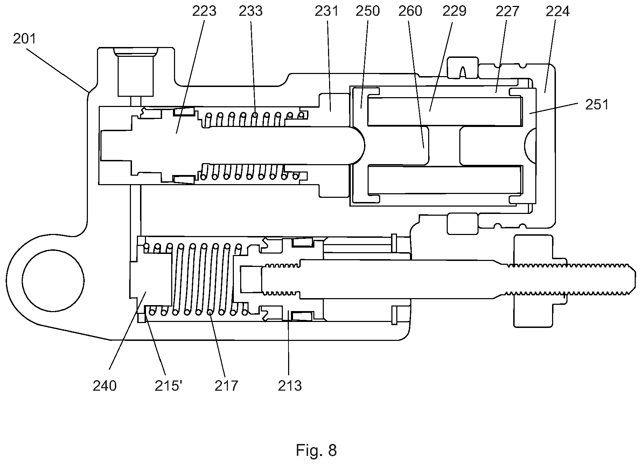

Fig. 8 illustrates a cross sectional view of an embodiment of a brake cylinder in the push configuration. The working principle and components of the brake cylinder 201 of Fig. 8 is the same as previously described. The embodiment shows how various features previously described may be combined.

The shown embodiment of the push configuration comprises a master cylinder spring 217 arranged between the master piston element 213 and a master cylinder stop element 240 arranged at the first end of the master cylinder chamber 215'. Similarly a slave cylinder spring 233 is arranged between the slave cylinder piston element 233 and a slave cylinder rod guide 231. Both springs 217,233 are arranged to bias the system towards its default position.

The brake cylinder 201 further comprises a damper housing 227 integrated in the brake cylinder housing 203 with a dampener 229 arranged within. A block in the form of a damper piston 250 is arranged in contact with the slave cylinder rod on one side and the damper 229 on the other. A damper housing cap 225 is arranged at the end of the damper housing not facing the slave cylinder chamber 221. A damper bracket 251 is arranged between the damper housing cap 225 and the damper 229. In the preferred embodiment shown in Fig. 8 both the damper piston 250 and the damper bracket 250 comprise protrusions forming mechanical stop 260. When pressure is applied to the pedal the master cylinder moves pressurising the fluid within the brake cylinder causing the slave cylinder rod to translate within the slave cylinder chamber. The slave cylinder rod acts on the damper piston 250 which in turn compresses the dampener 229. The movement of the damper piston 250 towards the damper bracket 251 is stopped once the mechanical stop 260 of the damper piston contacts the protrusion of the damper bracket 251.

The braking process and the feel of the pedal may be by exchanging the damper 229 using different resilient materials or springs to adjust how much force is required to compress the dampener 229. Different embodiments may further be adjusted by the length of the mechanical stop 260 of the block, damper piston and/or damper bracket, which adjusts how far the pedal can be depressed before the mechanical stop is reached.

Some preferred embodiments of the hydraulic brake cylinder, not illustrated in any of the figures, may be made without a master cylinder spring 217 and/or without a slave cylinder spring 233. In such embodiments, when the pressure applied to the pedal by the user is decreased or released the decompression of the dampener 229 causes the pistons and pedal to return to the default position. The working principle of the brake cylinder remains the same. As such it is understood that in embodiments wherein a master cylinder spring 217 and/or without a slave cylinder spring 233 is present the force required to depress the pedal also includes the force required to compress such springs 217,233 in addition to the force required to compress the dampener 229.

The foregoing description has been presented for purposes of illustration. It is not exhaustive and does not limit the invention to the precise forms or embodiments disclosed. Modifications and adaptations of the invention will be apparent to those skilled in the art from consideration of the specification and practice of the disclosed embodiments of the invention.

Other embodiments of the invention will be apparent to those skilled in the art from consideration of the specification and practice of the invention disclosed herein. It is intended that the specification and examples be considered as exemplary only, with a true scope within the following claims.

## Claims

1. A brake cylinder (201) configured to provide braking signalling to an automotive simulator, the brake cylinder (201) comprising:
a brake cylinder housing (203) including (i) a master cylinder chamber (215), (ii) a slave cylinder chamber (221), (iii) a chamber dividing wall (220) separating the master cylinder chamber (215) and the slave cylinder chamber (221), (iv) at least one channel configured to provide fluid communication between the master cylinder chamber (215) and the slave cylinder chamber (221);
a master piston (107) at least partially disposed within the master cylinder chamber (215), the master piston (107) configured to pressurize fluid in the master cylinder chamber (215) when a brake pedal (101) is depressed;
a slave piston (223) comprising a slave cylinder rod (230) at least partially disposed within the slave cylinder chamber (221); and
a pressure sensor (204) disposed in fluid communication with the brake cylinder (201), the pressure sensor (204) configured to measure pressure inside the chambers of the brake cylinder (201) and send a signal to a processor of the automotive simulator indicating of movement of the brake pedal (101); wherein, when pressurizing fluid in the master cylinder chamber (215), the master piston (107) is configured to drive fluid from the master cylinder chamber (215) to the slave cylinder chamber (221) via the at least one channel to increase pressure in the slave cylinder chamber (221), **characterised by** a dampener housing (227) positioned coaxially adjacent to said slave cylinder chamber (221), said slave cylinder rod (230) at least partially disposed within said dampener housing (227); and
a dampener (229) disposed within the dampener housing (227) wherein movement of the slave piston (223) from the first slave position to the second slave position compresses the dampener (229) and movement of the slave piston (223) from the second slave position to the first slave position decompresses the dampener (229).

2. The brake cylinder (201) of claim 1, wherein the at least one channel is an opening in the chamber dividing wall (220) or an external channel.

3. The brake cylinder (201) according to any of the claims 1-2, wherein the master piston (107) is configured to have movement limited to translation along an axis of the master piston (107) between a first master position and a second master position,
wherein the slave piston (223) is configured to have movement limited to translation along an axis of the slave piston (223) between a first slave position and a second slave position;
wherein the axis of the master piston and the axis of the slave piston are parallel to each other.

4. The brake cylinder (201) according to any of the claims 1-3, wherein movement of the master piston (107) from the first master position to the second master position is in a first direction and drives movement of the slave piston (223) from the first slave position to the second slave position in a second direction; and
wherein movement of the master piston (107) from the second master position to the first master position is in the second direction and drives movement of the slave piston (223) from the second slave position to the first slave position in the first direction.

5. The brake cylinder (201) according to any of the claim 1-4, further comprising:
a master cylinder spring (217) connected to the master piston (107), the master cylinder spring (217) configured to bias the master piston (107) towards the first master position in the second direction; and/or
a slave cylinder spring (233) connected to the slave piston (223), the slave cylinder spring (233) configured to bias the slave piston (223) towards the first slave position in the first direction.

6. The brake cylinder (201) according to any of the claims 1-5, wherein the slave piston includes a block (225) configured to limit axial movement of the slave piston (223) in the second direction via contact with the dampener housing (227).

7. The brake cylinder (201) of claim 6
wherein the slave piston (223) further includes a threaded nut (226);
wherein the block (225) is disposed between the dampener (229) and the threaded nut (226); wherein the threaded nut (226) is configured to adjust the stiffness of the brake pedal (101).

8. The brake cylinder (201) according to any of the claims 1-7, wherein the master piston (107) includes:
a master rod (205) at least partially disposed within the master cylinder chamber (215);
a brake pedal connector (207) configured to attach to the brake pedal (101); and
a brake arm adjuster (209) configured to adjust the distance between the brake pedal connector (207) and the master rod (205).

9. The brake cylinder (201) according to any of the claim 1-8, wherein pressure measurements of the pressure sensor (204) are correlated to depression displacement of the brake pedal (101).

10. The brake cylinder (201) according to any of the claim 1-9, wherein the brake cylinder housing (203) includes an attachment opening (202) configured to attach the brake cylinder (201) to a base (103).

11. A brake system configured to provide braking signalling to an automotive simulator, the brake system comprising:
a base (103);
a brake pedal (101) pivotably connected to the base; and
a brake cylinder (201) according to any of the claims 1-10 connected to the brake pedal (101).

## Patentansprüche

1. Bremszylinder (201), der so konfiguriert ist, dass er eine Bremssignalisierung an einen Kraftfahrzeugsimulator bereitstellt, wobei der Bremszylinder (201) Folgendes umfasst:
ein Bremszylindergehäuse (203), umfassend (i) eine Hauptzylinderkammer (215), (ii) eine Nehmerzylinderkammer (221), (iii) eine Kammertrennwand (220), die die Hauptzylinderkammer (215) und die Nehmerzylinderkammer (221) trennt, (iv) mindestens einen Kanal, der so konfiguriert ist, dass er eine Fluidverbindung zwischen der Hauptzylinderkammer (215) und der Nehmerzylinderkammer (221) bereitstellt;
einen Hauptkolben (107), der mindestens teilweise innerhalb der Hauptzylinderkammer (215) angeordnet ist, wobei der Hauptkolben (107) so konfiguriert ist, dass er Fluid in der Hauptzylinderkammer (215) mit Druck beaufschlagt, wenn ein Bremspedal (101) niedergedrückt wird;
einen Nehmerkolben (223) mit einer Nehmerzylinderstange (230), die zumindest teilweise innerhalb der Nehmerzylinderkammer (221) angeordnet ist; und
ein Drucksensor (204), der in Fluidverbindung mit dem Bremszylinder (201) angeordnet ist, wobei der Drucksensor (204) so konfiguriert ist, dass er den Druck in den Kammern des Bremszylinders (201) misst und ein Signal an einen Prozessor des Fahrzeugsimulators sendet, das die Bewegung des Bremspedals (101) anzeigt; wobei der Hauptkolben (107) so konfiguriert ist, dass er bei Druckbeaufschlagung von Fluid in der Hauptzylinderkammer (215) Fluid von der Hauptzylinderkammer (215) über den mindestens einen Kanal zur Nehmerzylinderkammer (221) treibt, um den Druck in der Nehmerzylinderkammer (221) zu erhöhen, **gekennzeichnet durch**
ein Dämpfungsgehäuse (227), das koaxial benachbart zu der Nehmerzylinderkammer (221) angeordnet ist, wobei die besagte Nehmerzylinderstange (230) zumindest teilweise innerhalb des Dämpfungsgehäuses (227) angeordnet ist; und
ein Dämpfer (229), der innerhalb des Dämpfergehäuses (227) angeordnet ist, wobei eine Bewegung des Nehmerkolbens (223) von der ersten Nehmerposition in die zweite Nehmerposition den Dämpfer (229) komprimiert und eine Bewegung des Nehmerkolbens (223) von der zweiten Nehmerposition in die erste Nehmerposition den Dämpfer (229) dekomprimiert.

2. Bremszylinder (201) nach Anspruch 1, wobei der mindestens ein Kanal eine Öffnung in der Kammertrennwand (220) oder ein äußerer Kanal ist.

3. Bremszylinder (201) nach einem der Ansprüche 1 bis 2, wobei der Hauptkolben (107) so konfiguriert ist, dass er eine Bewegung hat, die auf eine Translation entlang einer Achse des Hauptkolbens (107) zwischen einer ersten Hauptposition und einer zweiten Hauptposition beschränkt ist,
wobei der Nehmerkolben (223) so konfiguriert ist, dass er eine Bewegung hat, die auf eine Verschiebung entlang einer Achse des Nehmerkolbens (223) zwischen einer ersten Nehmerposition und einer zweiten Nehmerposition begrenzt ist;
wobei die Achse des Hauptkolben und die Achse des Nehmerkolbens parallel zueinander sind.

4. Bremszylinder (201) nach einem der Ansprüche 1 bis 3, wobei die Bewegung des Hauptkolbens (107) von der ersten Hauptposition zu der zweiten Hauptposition in einer ersten Richtung erfolgt und die Bewegung des Nehmerkolbens (223) von der ersten Nehmerposition zu der zweiten Nehmerposition in einer zweiten Richtung antreibt; und
wobei die Bewegung des Hauptkolbens (107) von der zweiten Hauptposition zu der ersten Hauptposition in einer zweiten Richtung erfolgt und die Bewegung des Nehmerkolbens (223) von der zweiten Nehmerposition zu der ersten Nehmerposition in der ersten Richtung antreibt.

5. Bremszylinder (201) nach einem der Ansprüche 1 bis 4, ferner umfassend:
eine mit dem Hauptkolben (107) verbundene Hauptzylinderfeder (217), wobei die Hauptzylinderfeder (217) so konfiguriert ist, dass sie den Hauptkolben (107) zu einer ersten Hauptposition in der zweiten Richtung vorspannt; und/oder
eine Nehmerzylinderfeder (233), die mit dem Nehmerkolben (223) verbunden ist, wobei die Nehmerzylinderfeder (233) so konfiguriert ist, dass sie den Nehmerkolben (223) zu einer ersten Nehmerposition in der ersten Richtung vorspannt.

6. Bremszylinder (201) nach einem der Ansprüche 1 bis **5,** wobei der Nehmerkolben einen Block (225) umfasst, der so konfiguriert ist, dass er eine axiale Bewegung des Nehmerkolbens (223) in der zweiten Richtung über einen Kontakt mit dem Dämpfungsgehäuse (227) begrenzt.

7. Bremszylinder (201) nach Anspruch 6
wobei der Nehmerkolben (223) ferner eine Gewindemutter (226) beinhaltet;
wobei der Block (225) zwischen dem Dämpfer (229) und der Gewindemutter (226) angeordnet ist;
wobei die Gewindemutter (226) so konfiguriert ist, dass sie die Steifigkeit des Bremspedals (101) einstellt.

8. Bremszylinder (201) nach Anspruch 1 bis 7, wobei der Hauptkolben (107) Folgendes beinhaltet:
eine Stange (205), die mindestens teilweise innerhalb der Hauptzylinderkammer (215) angeordnet ist;
einen Bremspedalverbinder (207), der so konfiguriert ist, dass er sich an das Bremspedal (101) anfügt und es befestigt; und
einen Bremsarmeinsteller, (209) der dazu konfiguriert ist, den Abstand zwischen dem Bremspedalverbinder (207) und der Hauptstange (205) einzustellen.

9. Bremszylinder (201) nach einem der Ansprüche 1 bis 8, wobei Druckmessungen des Drucksensors (204) mit einer Verschiebung beim Niederdrücken des Bremspedals (101) korreliert sind.

10. Bremszylinder (201) nach einem der Ansprüche 1 bis 9, wobei das Bremszylindergehäuse (203) eine Befestigungsöffnung (202) aufweist, die konfiguriert ist, dass sie den Bremszylinder (201) an einer Basis (103) befestigt.

11. Bremssystem, das so konfiguriert ist, dass es eine Bremssignalisierung an einen Kraftfahrzeugsimulator bereitstellt, wobei das Bremssystem Folgendes umfasst:
eine Basis (103);
ein Bremspedal (101), das schwenkbar mit der Basis verbunden ist; und
einen Bremszylinder (201) nach einem der Ansprüche 1 bis 10, der mit dem Bremspedal (101) verbunden ist.

## Revendications

1. Cylindre de frein (201) configuré pour fournir une signalisation de freinage à un simulateur automobile, le cylindre de frein (201) comprenant :
un boîtier de cylindre de frein (203) comprenant (i) une chambre de maître-cylindre (215), (ii) une chambre de cylindre récepteur (221), (iii) une paroi de séparation de chambres (220) séparant la chambre de maître-cylindre (215) et la chambre de cylindre récepteur (221), (iv) au moins un canal configuré pour fournir une communication fluidique entre la chambre de maître-cylindre (215) et la chambre de cylindre récepteur (221) ;
un piston maître (107) disposé au moins en partie à l'intérieur de la chambre de maître-cylindre (215), le piston maître (107) étant configuré pour mettre le fluide sous pression dans la chambre de maître-cylindre (215) lorsqu'une pédale de frein (101) est enfoncée ;
un piston esclave (223) comprenant une tige de cylindre récepteur (230) disposée au moins en partie à l'intérieur de la chambre de cylindre récepteur (221) ; et
un capteur de pression (204) disposé en communication fluidique avec le cylindre de frein (201), le capteur de pression (204) étant configuré pour mesurer la pression à l'intérieur des chambres du cylindre de frein (201) et envoyer un signal à un processeur du simulateur automobile indiquant un mouvement de la pédale de frein (101) ; dans lequel, lors de la mise sous pression du fluide dans la chambre de maître-cylindre (215), le piston maître (107) est configuré pour entraîner le fluide de la chambre de maître-cylindre (215) vers la chambre de cylindre récepteur (221) via l'au moins un canal pour augmenter la pression dans la chambre de cylindre récepteur (221), **caractérisé en ce que**
un boîtier d'amortisseur (227) positionné coaxialement de manière adjacente à ladite chambre de cylindre récepteur (221), ladite tige de cylindre récepteur (230) étant disposée au moins en partie à l'intérieur dudit boîtier d'amortisseur (227) ; et
un amortisseur (229) disposé à l'intérieur du boîtier d'amortisseur (227) dans lequel le mouvement du piston esclave (223) de la première position esclave à la seconde position esclave comprime l'amortisseur (229) et le mouvement du piston esclave (223) de la seconde position esclave à la première position esclave décomprime l'amortisseur (229).

2. Cylindre de frein (201) selon la revendication 1, dans lequel l'au moins un canal désigne une ouverture dans la paroi de séparation de chambres (220) ou un canal externe.

3. Cylindre de frein (201) selon l'une quelconque des revendications 1 à 2, dans lequel le piston maître (107) est configuré pour présenter un mouvement limité par rapport à une translation le long d'un axe du piston maître (107) entre une première position maître et une seconde position maître,
dans lequel le piston esclave (223) est configuré pour présenter un mouvement limité par rapport à la translation le long d'un axe du piston esclave (223) entre une première position esclave et une seconde position esclave ;
dans lequel l'axe du piston maître et l'axe du piston esclave sont parallèles l'un à l'autre.

4. Cylindre de frein (201) selon l'une quelconque des revendications 1 à 3, dans lequel le mouvement du piston maître (107) de la première position maître à la seconde position maître se fait dans une première direction et entraîne le mouvement du piston esclave (223) de la première position esclave à la seconde position esclave dans une seconde direction ; et
dans lequel le mouvement du piston maître (107) de la seconde position maître à la première position maître se fait dans la seconde direction et entraîne le mouvement du piston esclave (223) de la seconde position esclave à la première position esclave dans la première direction.

5. Cylindre de frein (201) selon l'une quelconque des revendications 1 à 4, comprenant également :
un ressort de maître-cylindre (217) relié au piston maître (107), le ressort de maître-cylindre (217) étant configuré pour solliciter le piston maître (107) vers la première position maître dans la seconde direction ; et/ou
un ressort de cylindre récepteur (233) relié au piston esclave (223), le ressort de cylindre récepteur (233) étant configuré pour solliciter le piston esclave (223) vers la première position esclave dans la première direction.

6. Cylindre de frein (201) selon l'une quelconque des revendications 1 à 5, dans lequel le piston esclave comprend un bloc (225) configuré pour limiter le mouvement axial du piston esclave (223) dans la seconde direction via un contact avec le boîtier d'amortisseur (227).

7. Cylindre de frein (201) selon la revendication 6 dans lequel le piston esclave (223) comporte également un écrou fileté (226) ;
dans lequel le bloc (225) est disposé entre l'amortisseur (229) et l'écrou fileté (226) ;
dans lequel l'écrou fileté (226) est configuré pour régler la rigidité de la pédale de frein (101).

8. Cylindre de frein (201) selon l'une quelconque des revendications 1 à 7, dans lequel le piston maître (107) comporte :
une tige maître (205) disposée au moins en partie à l'intérieur de la chambre de maître-cylindre (215) ;
un raccord de pédale de frein (207) configuré pour se fixer à la pédale de frein (101) ; et
un dispositif de réglage de levier de frein (209) configuré pour régler la distance entre le raccord de pédale de frein (207) et la tige maître (205).

9. Cylindre de frein (201) selon l'une quelconque des revendications 1 à 8, dans lequel les mesures de pression du capteur de pression (204) sont corrélées au déplacement d'enfoncement de la pédale de frein (101).

10. Cylindre de frein (201) selon l'une quelconque des revendications 1 à 9, dans lequel le boîtier de cylindre de frein (203) comprend une ouverture de fixation (202) configurée pour fixer le cylindre de frein (201) à une base (103).

11. Système de freinage configuré pour fournir une signalisation de freinage à un simulateur automobile, le système de freinage comprenant :
une base (103) ;
une pédale de frein (101) reliée de manière pivotante à la base ; et
un cylindre de frein (201) selon l'une quelconque des revendications 1 à 10 relié à la pédale de frein (101).
